# EUROPÄISCHE PATENTSCHRIFT

(11) **EP 3 245 855 B1**
(45) Veröffentlichungstag und Bekanntmachung des Hinweises auf die Patenterteilung: **02.03.2022**
(21) Anmeldenummer: 17160268.3
(22) Anmeldetag: 10.03.2017
(51) Int. Cl.: A01B 19/02, A01B 23/02, A01B 61/04

(54) **LANDWIRTSCHAFTLICHES BODENBEARBEITUNGSGERÄT, FEDERZINKEN HIERFÜR UND ANORDNUNG EINES FEDERZINKENS**
AGRICULTURAL SOIL WORKING IMPLEMENT, SPRING TINE FOR SAME AND ASSEMBLY OF A SPRING TINE
CULTIVATEUR, DENTS PLATES ASSOCIÉES ET SYSTÈME DE DENTS PLATES

(30) Priorität: 28.04.2016 DE 102016107951
(43) Veröffentlichungstag der Anmeldung: 22.11.2017
(73) Patentinhaber: Horsch Maschinen GmbH, 92421 Schwandorf (DE)
(72) Erfinder: PIRKENSEER, Michael, 92421 Schwandorf (DE); DUSCHINGER, Andreas, 92421 Schwandorf (DE)
(74) Vertreter: Benninger, Johannes

(56) Entgegenhaltungen:
- EP-A1- 1 396 183
- EP-A1- 2 923 538
- CA-A1- 2 928 289
- DE-A1- 3 346 396
- DE-A1- 10 238 917
- DE-A1- 10 341 757
- DE-A1-102012 005 027
- DE-C- 247 207
- GB-A- 1 445 017

## Beschreibung

Die vorliegende Erfindung betrifft ein landwirtschaftliches Bodenbearbeitungsgerät mit den Merkmalen des unabhängigen Anspruchs 1, einen Federzinken, insbesondere zur Verwendung in der landwirtschaftlichen Bodenbearbeitung, mit den Merkmalen des unabhängigen Anspruchs 11, sowie eine Anordnung eine Anordnung eines Federzinkens mit den Merkmalen des unabhängigen Anspruchs 15.

Bei der landwirtschaftlichen Bodenbearbeitung kann es bei bestimmten Bodenverhältnissen sinnvoll sein, den Ackerboden mittels geeigneter Grubberwerkzeuge zu lockern, zu krümeln und/oder zu belüften. Auch bei Böden, die nicht oder nur selten gepflügt werden, kann es sinnvoll sein, nach einer Ernte übrig gebliebene Stoppeln einzuarbeiten, Unkräuter zurückzudrängen etc. Diese sog. nichtwendende Bodenbearbeitung wurde in der Vergangenheit oftmals mit fest an einem Trägerrahmen verankerten starren Grubberzinken durchgeführt, die allerdings je nach gewünschter Arbeitstiefe extremen Belastungen ausgesetzt sein konnten.

Um diese Belastungen zu reduzieren, wurden in den vergangenen Jahrzehnten federnde Grubberzinken eingesetzt, die sich gegenüber Hindernissen im Boden als nachgiebig erwiesen und durch ihre Vibrationsfähigkeit besser geeignet waren, größere Erdschollen zu zerkleinern. Allerdings sind mit der federnden Aufhängung der Grubberzinken auch gewisse Nachteile verknüpft, so etwa der sich mit dem variablen Anstellwinkel ändernde Tiefgang des jeweiligen Zinkens, der nicht nur nach rückwärts, sondern auch nach oben ausweicht. Bereits geringe Widerstandsänderungen im Boden können zu einer ausgeprägten Ausweichbewegung führen, woraus eine ungleichmäßige Arbeitstiefe resultiert.

Sog. halbstarre Aufhängungen von Grubberzinken versuchten, die Nachteile des starken Ausweichens nach oben mit der damit verbundenen ausgeprägten Reduzierung des Tiefgangs des Zinkens zu vermeiden. Bei diesen sog. halbstarren Zinken können bspw. nur die oberen Abschnitte flexibel ausgeführt sein, während die unteren, in den Boden eintauchenden Abschnitte relativ biegesteif bleiben, wobei der flexible Abschnitt bspw. durch eine Schraubenfeder mit definierbarer Federkraft abgestützt sein kann. Vorteilhaft an diesen halbstarren Ausführungen ist die relativ geringe Ausweichbewegung nach oben, wenn der Zinken auf einen Bodenwiderstand trifft, wobei dennoch die zerkleinernden Effekte durch die Vibrationswirkungen erhalten bleiben.

Da jedoch die Flexibilität und die mit den halbstarren Zinken realisierbaren Ausweichbewegungen für viele Zwecke nicht ausreichen, sind für zahlreiche Bodenbedingungen nach wie vor Federzinken das Mittel der Wahl. Allerdings hat sich bei diesen Federzinken in der Praxis gezeigt, dass oftmals Zielkonflikte zwischen einer gewünschten Nachgiebigkeit beim Auftreffen auf Hindernisse und einer maximal gewünschten bzw. zulässigen Verformung auftreten können, so dass mittels verschiedener Maßnahmen nicht nur versucht wurde, die Ausweichbewegungen solcher Federzinken zu begrenzen. Ein weiteres Problem kann dann auftreten, wenn relativ elastische Federzinken beim Auftreffen auf ein Hindernis im Boden ausweichen und sich nach dem Passieren des Hindernisses schwungvoll zurückbewegen. Solche Rückschwingbewegungen können unter Umständen Beschädigungen, teilweise sogar ein mechanisches Versagen des Federzinkens verursachen.

Die DE 102 07 020 A1 offenbart einen Grubber mit Federzinken, die jeweils eine Federwindung oder mehrere Federwindungen aufweisen. Den Federzinken sind dämpfende Vorrichtungen zugeordnet, die das Zurückschwingen in Fahrtrichtung abbremsen sollen, was die erwähnte Beschädigungsgefahr beim Zurückschwingen des jeweiligen Federzinkens nach dem bestimmungsgemäßen Ausweichen reduzieren soll. Die dämpfenden Vorrichtungen können bspw. durch elastische Kunststoffelemente gebildet sein, die als Anschlagpuffer für einen aufhängungsnahen oberen Bereich der Federzinken dienen, so dass sie beim Zurückschwingen dort auftreffen und anliegen können. Zwischen Rahmen und Federzinken befindet sich ein auf der Rückseite des Federzinkens befindliches Zugelement, welches in Richtung des freien Endes des Federzinkens gesehen unterhalb der Federwindung am Federzinken befestigt ist. Das Zugelement kann in Form von einer Zugfeder ausgebildet sein. Im Ruhezustand des Federzinkenes steht das Zugelement unter Spannung, was die Folge hat, dass der Federzinken in seiner eingebauten Position vorgespannt ist. Der Aufbau und die Anordnung zur Vorspannung des Federzinkens sind komplex und bedingen einen vergleichsweise hohen Teile- und Montageaufwand. Es sei außerdem erwähnt, dass das eigentliche Ziel des Gegenstandes der DE 102 07 020 A1 darin besteht, den Federzinken nach dem Ausweichen beim Erreichen seiner Arbeitsstellung abzubremsen und am Durchschwingen über seine Arbeitsstellung, in Fahrtrichtung gesehen, hinaus zu hindern. Die Vorspannung des Federzinkens durch die Zugspannung ist damit lediglich ein Nebeneffekt, welcher durch die Zugfeder verursacht wird.

Ein in beide Bewegungsrichtungen wirkendes Zugelement zur Energieumwandlung eines schwingenden Federzinkens wird in der DE 102 38 917 A1 vorgeschlagen. Dort ist zwischen einem Maschinenrahmen eines Grubbers, an dem mehrere Federzinken befestigt sind, und einer Rückseite der jeweiligen Federzinken ein Zugelement angeordnet, das bspw. durch einen Stoßdämpfer oder ein Federelement gebildet sein kann.

Ein ähnliches System, bei dem die Rückseiten der Federzinken eines Grubbers mit hydraulischen Dämpfungselementen abgestützt sind, zeigt die DE 103 41 757 A1. Durch eine gemeinsame hydraulische Verbindung der Dämpfungselemente lassen sich diese in ihren Dämpfungseigenschaften bedarfsweise verstellen und an jeweils unterschiedliche Bodenbeschaffenheiten anpassen.

Da trotz der bei bekannten Grubbersystemen eingesetzten Dämpfungselemente bei bestimmten Betriebsbedingungen mechanische Überlastungen auftreten können, wird in der DE 202 13 736 U1 eine mechanische Überlast- oder Steinsicherung für Scharstiele bzw. Grubberzinken vorgeschlagen. Hierzu befindet sich ein Federpaket zwischen einem Maschinenrahmen und dem jeweiligen Federzinken, das bei hohem Widerstand zur Erzielung einer definierten Auslösung auf Druck belastet und seitlich ausgelenkt werden soll.

Eine weitere Variante eines Federzinkens wird in der WO 2010/147545 A1 beschrieben. Die Federzinken weisen in ihrem oberen Bereich zwischen einer Fixierung an einem Maschinenrahmen und ihrem sichelförmigen, in den Boden eingreifenden Zinkenverlauf eine einfache Windung auf, die den Zinken definierte Federeigenschaften verleihen und ihnen ein Ausweichen beim Auftreffen auf harte Bodenwiderstände ermöglichen soll. Die Anordnung der eine Ringfeder bildenden Windung im Verlauf der Federzinken unterhalb des Maschinenrahmens führt zu einer relativ großen Bauhöhe der gesamten Maschine.

Die Vorspannung eines Federzinkens im montierten Zustand wird durch DE 10 2009 051 431 A1 offenbart. Aufgrund der Vorspannung verhält sich der Federzinken im Wesentlichen so lange wie ein starrer Federzinken, bis die Resultierende der vom Boden auf die federnde Halterung und den Federzinken aufgebrachten Kräfte die Vorspannkraft überwindet und die Halterung über den Vorspannweg hinausgehend weiter elastisch auslenkt. Die Vorspannung des Federzinkens wird über eine Vorspanneinrichtung bewirkt, welche aus einem aus einer fest mit dem Rahmenprofil verbundenen Auslegereinheit, an deren Ende ein Riegel um eine horizontale, quer zur Fahrtrichtung angeordneten Achse schwenkbar montiert ist. Durch den Riegel wird ein Zugelement so hindurchgeführt, dass es in seiner achsparallelen Aufwärtsbewegung frei ist aber in seiner Abwärtsbewegung durch ein in Achsrichtung einstellbar fixiertes Anschlagelement gehindert wird. Der Federzinken ist dabei so angeordnet, dass dieser auf der Rahmenunterseite mittels der Vorspanneinrichtung festgesetzt ist. Aufgrund seiner S-förmigen Ausführung ist der Federzinken zunächst über und anschließend unter dem Rahmen geführt. Dies führt zwangsläufig zu einem reduziertem Raum zwischen Rahmen und Scharspitze des Federzinkens, was beispielsweise eine erhöhte Verstopfungsanfälligkeit zur Folge haben kann. Die Vorspannung des Federzinkens mittels der Vorspanneinrichtung führt zudem zu einer relativ großen Bauhöhe der gesamten Maschine.

Die zitierte DE 10 2009 051 431 A1 ist jedoch bereits durch die EP 1 396 183 A1 vorbekannt, welche ein Überlast- und Steinsicherung für landwirtschaftliche Maschinen offenbart. Der Gegenstand zeichnet sich dadurch aus, dass beim Auftreffen eines Scharelements auf ein Hindernis zu Beginn das Federelement in Form der Auslöse-Federanordnung der Auslenkung einen hohen Widerstand entgegensetzt, was am hohen Widerstandsmoment der eingespannten Auslöse-Blattfeder oder der Druckfeder oder des elastischen Federblocks liegt. Konkret bedeutet dies: Trifft die Scharspitze bei der Bodenbearbeitung auf ein Hindernis, setzt die Überlast-Blattfeder aufgrund der eingeprägten Vorspannung durch die Auslöse-Blattfeder einer Auslenkung einen erheblichen Widerstand entgegen, und zwar solange, bis die eingeprägte Vorspannung der Auslöse-Blattfeder überwunden wird. Bei Überschreiten eines bestimmten Wertes lenkt das Federsystem aus. Die Auslöse-Federanordnung ist zwischen dem Rahmen und dem Scharstil angeordnet. Damit sind sämtliche Merkmale des Gegenstandes der DE 10 2009 051 431 A1 offenbart.

Die EP 1 396 183 A1 weist ebenfalls die Nachteile auf, dass es aufgrund der Anordnung und Ausgestaltung des Federzinkens zu einer relativ großen Bauhöhe der gesamten Maschine führt. Zudem ist der Raum zwischen Rahmen und dem freien Ende des Federzinkens aufgrund der S-förmigen Ausgestaltung des Federzinkens begrenzt.

Die EP 1 961 283 B1 offenbart einen Striegelzinken, welcher durch Zugfedern vorgespannt wird. Zur Vorspannung der Zinken ist das eine Ende der Federn an der Striegelzinken unterhalb ihrer Anlenkung befestigt, während das andere Ende der Federn über je ein Zugseil mit einer am Tragrahmen drehbar angeordneten Verstellwelle verbunden ist. Durch Drehung der Verstellwelle kann eine zentrale Verstellung des Zinkendrucks der Striegelzinken erreicht werden.

Für den praktischen Einsatz haben sich manche der vorgeschlagenen Lösungen als aufwendig und technisch komplex erwiesen, auch wenn sie eine Anpassbarkeit an verschiedene Bodenverhältnisse erlauben.

Angesichts der aus dem Stand der Technik bekannten Grubbersysteme mit Federzinken kann das vorrangige Ziel der vorliegenden Erfindung darin gesehen werden, einen für unterschiedliche Bodenverhältnisse, für steinige Böden wie für feuchte oder schwere Böden universell verwendbaren Grubber mit Federzinken bzw. einen solchen Federzinken für einen landwirtschaftlichen Einsatz zur Verfügung zu stellen, der auf diesen unterschiedlichen Bodenverhältnissen gleichermaßen seine Aufgaben erfüllen kann. Der Federzinken soll einerseits beim Auftreffen auf Hindernisse wie Steine etc. über einen ausreichenden Federweg verfügen, andererseits aber bei widerständigen Bodenverhältnissen nicht zu nachgiebig sein und nicht zu weit ausweichen, so dass insgesamt für unterschiedliche Bodenverhältnisse eine weitgehend gleichmäßige Bodenbearbeitung erreicht werden kann. Ein weiteres Ziel besteht darin, den Federzinken bzw. den mit solchen Federzinken ausgestatteten Grubber möglichst kompakt auszuführen.

Diese Ziele werden mit den Gegenständen der unabhängigen Ansprüche erreicht. Merkmale vorteilhafter Weiterbildungen der Erfindung lassen sich den abhängigen Ansprüchen entnehmen. So schlägt die vorliegende Erfindung zur Erreichung zumindest einiger der genannten Ziele ein landwirtschaftliches Bodenbearbeitungsgerät mit den Merkmalen des unabhängigen Anspruchs 1 vor, das insbesondere durch einen Grubber gebildet sein kann, der mit einer Mehrzahl oder Vielzahl von in den Boden eingreifenden Zinken ausgestattet ist. Das erfindungsgemäße landwirtschaftliche Bodenbearbeitungsgerät umfasst einen Rahmen oder Tragrahmen sowie einige daran befestigte Federzinken, welche jeweils wenigstens eine Federwindung aufweisen, was ihnen eine erwünschte und zur Vermeidung von Beschädigungen erforderliche Nachgiebigkeit beim Auftreffen auf größere Hindernisse wie Steine, Erdbrocken oder andere derartige Hindernisse verleiht. Zumindest einer der Federzinken ist mit einer definierten und/oder innerhalb definierbarer Grenzen variabler Vorspannkraft beaufschlagt, wobei der zumindest eine mit Vorspannkraft beaufschlagte Federzinken mittels eines Auflageelements vorgespannt ist, wodurch dem Federzinken eine nichtlineare Kraft-Weg-Kennlinie aufgeprägt ist. So kann insbesondere vorgesehen sein, dass der wenigstens eine mit Vorspannkraft beaufschlagte oder beaufschlagbare Federzinken in einem ersten, nicht montierten Zustand entspannt bzw. nicht vorgespannt ist, während dieser Federzinken in einem zweiten, montierten Zustand vorgespannt und/oder mit definierter und/oder innerhalb definierbarer Grenzen variabler Vorspannkraft beaufschlagt ist.

Dem erfindungsgemäßen landwirtschaftlichen Bodenbearbeitungsgerät bzw. dem erfindungsgemäßen Federzinken sollen bestimmte mechanische Eigenschaften aufgeprägt werden, welche die Erreichung der oben genannten Ziele ermöglichen sollen. Zu diesem Zweck wird ein Gerät mit Federzinken bzw. mindestens ein solcher Federzinken geschaffen bzw. zur Verfügung gestellt, der zum einen eine definierte Vorspannkraft besitzt, um somit eine möglichst gleichmäßige Bodenbearbeitung zu gewähren, der aber gleichzeitig so ausgebildet ist, dass er beim Auftreffen auf Hindernisse wie etwa Steine noch einen ausreichenden Federweg zur Verfügung stellen kann. Dennoch soll das Gerät mit den Federzinken bzw. der mindestens eine für ein solches Gerät vorzugsweise einsetzbare Federzinken möglichst kompakt bauen und möglichst wenig Bauraum benötigen. Dieses Ziel kann insbesondere dadurch erreicht werden, indem der Federzinken einen ersten, nicht montierten und nicht vorgespanntem Zustand, und einem zweiten, vorgespannten und eine definierte Vorspannkraft ausübenden Zustand einnehmen bzw. aufweisen kann.

Das erfindungsgemäße Gerät kann insbesondere ein von einer landwirtschaftlichen Zugmaschine gezogenes oder selbstfahrendes landwirtschaftliches Bodenbearbeitungsgerät sein, worunter insbesondere ein Grubber verstanden werden kann, das bzw. der mit einem Tragrahmen sowie ggf. mit geeigneten Mitteln zur Tiefenführung wie z.B. mit höhenverstellbaren Tragrädern ausgestattet sein kann. Vorzugsweise trägt der Rahmen dieses Bodenbearbeitungsgerätes bzw. dieser Grubbers mehrere, zumindest jedoch einen zumindest abschnittsweise bogen-, sichelförmig oder S-förmig gestalteten, zumindest abschnittsweise elastisch verformbaren und/oder unter Zugbelastung bei einem Eingriff bzw. Eintauchen in einen Ackerboden zumindest abschnittsweise elastisch nachgiebigen Federzinken zur furchenden Bodenbearbeitung, wobei die elastischen Eigenschaften des wenigstens einen Federzinkens sowohl durch die Formgebung und die Materialstärke des Federzinkens, durch seine Materialeigenschaften als auch durch seine Verankerung am Tragrahmen definiert sind, und wobei der Federzinken mit definierter oder innerhalb definierbarer Grenzen variabler Vorspannkraft am Tragrahmen verankert bzw. fixiert ist.

Eine derartige Aufprägung einer Vorspannkraft kann insbesondere dann von Vorteil sein, wenn der erfindungsgemäße Federzinken in einem Sägerät bzw. einer Sämaschine Verwendung finden und bei dessen Einsatz eine konstante Arbeitstiefe eingehalten werden soll.

Wenn im vorliegenden Zusammenhang von einer Befestigung der Federzinken am Rahmen oder Tragrahmen des landwirtschaftlichen Bodenbearbeitungsgerätes die Rede ist, so kann dies normalerweise eine lösbare Verbindung umfassen, insbesondere durch unmittelbare oder mittelbare Verschraubungen, wobei eine mittelbare Verschraubung bspw. mit zusätzlichen Klemmelementen ausgebildet sein kann. Eine unmittelbare Verschraubung kann bspw. bedeuten, dass an den Einspannabschnitten der Federzinken entsprechende Schraublöcher für Durchsteckverschraubungen oder angeformte oder angeschweißte Schraubbolzen vorgesehen sein können. Eine mittelbare Verschraubung kann bspw. durch Klemmelemente gebildet sein, die ober- und/oder unterhalb des jeweiligen Rahmenrohrs oder Trägers angeordnet sind, dieses/diesen umgreifen und dabei gleichzeitig den Einspannabschnitt des jeweiligen Federzinkens klemmend halten, ohne dass dieser mit zusätzlichen Befestigungselementen ausgestattet sein muss.

Die zur Erreichung, zumindest eines oder auch mehrerer der oben genannten Ziele, dem wenigstens einen Federzinken aufgeprägte Vorspannung resultiert in einem definierbaren Verhalten des Federzinkens in einem regulären Bodenbearbeitungsmodus, wo er auf geringen mechanischen Widerstand stößt, wenn das Bodenbearbeitungsgerät bzw. der Grubber durch zu furchenden Ackerboden gezogen wird. Jedoch auch bei größeren auftretenden Widerständen zeigt der solchermaßen vorgespannte Federzinken ein ganz spezifisches, erwünschtes Verhalten. So weist der zumindest eine im montierten Zustand mit der Vorspannkraft beaufschlagte Federzinken eine nichtlineare Kraft-Weg-Kennlinie auf. Diese nichtlineare Kraft-Weg-Kennlinie zeigt einen zunächst von einem Nullpunkt ausgehenden relativ flachen Verlauf; dieser Verlauf geht bei Erreichen der definierten bzw. definierbaren Vorspannkraft in einen steileren Verlauf über. Somit weist die Kraft-Weg-Kennlinie des solchermaßen ausgestatteten Federzinkens einen mehr oder weniger deutlichen Knick in ihrem Verlauf auf, der je nach Ausgestaltung der Vorspannung ggf. auch durch einen abgerundeten bzw. weicheren Übergang oder-je nach Ausgestaltung als mehrstufige Vorspannung - auch durch mehrfache Knicke etc. ersetzt sein kann.

Die Positionierung der Knick- oder Unstetigkeitstelle in der Kraft-Weg-Kennlinie des erfindungsgemäßen Federzinkens kann bedarfsweise variabel sein und bspw. bei einem sinnvollen Wert von etwa einem Kilonewton (1 kN), wahlweise jedoch auch darunter oder darüber liegen. Die Steigung der Kraft-Weg-Kennlinie selbst hängt dagegen stärker von der Gestaltung und den elastischen Eigenschaften des Federzinkens ab.

Eine besonders sinnvolle Ausführungsvariante des erfindungsgemäßen Bodenbearbeitungsgerätes kann vorsehen, dass der zumindest eine im montierten Zustand mit der Vorspannkraft beaufschlagte Federzinken mittels eines Auflageelements vorgespannt sein kann. Bei diesem Auflageelement kann es sich bspw. um ein elastisches Bauteil handeln, das den Federzinken vorzugsweise nahe seiner Befestigungsstelle am Rahmen vorspannt. Besonders eignet sich für diese Zwecke ein elastisches Auflageelement, das bspw. durch einen Kunststoff mit gewünschten elastischen Eigenschaften gebildet sein kann. Ebenso denkbar wäre jedoch auch ein nicht elastisches, starres Auflageelement, welches bspw. als Metallelement ausgebildet sein kann.

Auch kann bei einer Variante des erfindungsgemäßen Bodenbearbeitungsgerätes vorgesehen sein, dass das Auflageelement zumindest teil- oder abschnittsweise aus einem elastisch nachgiebigen Material gebildet ist, so dass die elastischen Eigenschaften des elastisch nachgiebigen Materials die Vorspannkraft für den Federzinken innerhalb gewünschter definierbarer Grenzen variabel bzw. vorgebbar macht.

Es kann vorgesehen sein, dass das Auflageelement durch eine keilförmige Unterlage gebildet ist, die ggf. eine L-förmige Form aufweist, so dass sie auf einem Rahmenrohr der Bodenbearbeitungsmaschine aufgesetzt und unverrückbar montiert und fixiert werden kann. Hierbei können eine Länge und eine Höhe des Auflageelements in einem Verhältnis von bspw. etwa 2:1 stehen, wobei insbesondere die Länge einen Wert zwischen 90 mm und 120 mm und die Höhe des Auflageelements einen Wert zwischen 55 mm und 95 mm aufweisen kann. Im montierten Zustand kann das Auflageelement mit zumindest zwei Mantelflächen des Trägerrahmens in Oberflächenkontakt stehen. Insbesondere kann das Auflageelement mit einer Oberseite und mit einer Seite des Trägerrahmens in Oberflächenkontakt stehen. Aufgrund der Ausbildung des Auflageelements als keilförmige Unterlage kann das Auflageelement entlang seiner Längserstreckungsrichtung eine schräge Ebene und damit einen Winkel einschließen, welcher Winkel einen Wert zwischen 3° und 15°, insbesondere zwischen 5° und 11° betragen kann.

Es kann weiterhin vorgesehen sein, dass das Auflageelement wenigstens eine Ausnehmungen umfasst, in welche Ausnehmungen jeweils Befestigungsmittel einsetzbar sind, so dass am Auflageelement seitlich Stützstreifen o. dgl. befestigbar sind, die den entsprechend aufliegenden Abschnitt des Federzinkens bei seitlichen Belastungen in seiner Position halten und am Herabrutschen hindern. Vorzugsweise kann das Auflageelement drei Ausnehmungen umfassen, wobei die drei Ausnehmungen auf einer Ebene und gleichmäßig zueinander beabstandet sind. Somit dienen die Ausnehmungen in erster Linie dazu, mit Befestigungsmitteln, Verschraubungen o. dgl. zusammenzuwirken, die bspw. dort hindurchgreifen können, um weitere Elemente am Auflageelement zu befestigen und/oder um das Auflageelement am Rahmen zu befestigen.

Ebenso denkbar ist es, das erfindungsgemäße Bodenbearbeitungsgerät gemäß einer anderen Ausführungsvariante mit einem Aktor auszustatten, bspw. mit einem hydraulischen Aktor und/oder mit einem pneumatischen Aktor und/oder mit einem Feder- und/oder Dämpfungselement, das für die gewünschte Vorspannung des Federzinkens sorgt, ggf. sogar für eine variabel einstellbare Vorspannung, die je nach Bedarf auch im laufenden Betrieb des Bodenbearbeitungsgerätes an die jeweiligen Erfordernisse und die Bodeneigenschaften und/oder die Fahrgeschwindigkeit etc. angepasst werden kann.

Weiterhin kann bei dem erfindungsgemäßen Bodenbearbeitungsgerät vorgesehen sein, dass der wenigstens eine mit der Vorspannkraft beaufschlagte Federzinken einen bogen- oder sichelförmigen Verlauf aufweist, welcher abschnittsweise, insbesondere in einem Bereich nahe des Rahmens in etwa gleichgerichtet, parallel oder ungefähr parallel zu einem am oder im Rahmen befestigten bzw. befestigbaren Einspannabschnitt verläuft, wobei die wenigstens eine vollständige Federwindung des Federzinkens einen Kreisbogen oder Kreisbogenabschnitt mit einem Bogenwinkel zwischen etwa 500° bis 600° beschreibt. Die erwähnte Federwindung kann dadurch eine vollständige einfache Windung bilden, wobei die über einen Bogenwinkel von 360° hinausgehenden Abschnitte die Tatsache berücksichtigen, dass der Einspannabschnitt und der zum Bodenbearbeitungsabschnitt des Federzinkens führende Bereich nebeneinander verlaufen, während die Windung ein einseitiges Ende des Federzinkens bildet.

Ebenso denkbar sind jedoch auch doppelte Windungen oder mehrfache Windungen. Bei einer solchen Ausgestaltung kann weiterhin vorgesehen sein, dass der Einspannabschnitt des wenigstens einen mit der Vorspannkraft beaufschlagten Federzinkens auf einer Oberseite oder auf einer Unterseite eines Rahmenträgers des Rahmens aufliegt und befestigt bzw. befestigbar ist. Außerdem kann die wenigstens eine Windung des mit der Vorspannkraft beaufschlagten Federzinkens in Bewegungsrichtung des Bodenbearbeitungsgeräts frontseitig des Rahmenträgers angeordnet sein, an dem der Federzinken befestigt bzw. befestigbar ist, was insgesamt zu einer besonders platzsparenden Bauweise des Bodenbearbeitungsgerätes mit relativ tief liegendem Rahmen beitragen kann, wodurch auch größere Geräte mit schwenkbaren und/oder faltbaren Abschnitten kompakt genug ausfallen können, um einen problemlosen Transport, bspw. auf öffentlichen Straßen, zu erlauben.

Das erwähnte Auflageelement bzw. das starre oder elastische Auflageelement kann bspw. auf einer Oberseite oder ggf. an einer Unterseite des Rahmenträgers angeordnet sein, an dem auch der Federzinken befestigt bzw. befestigbar ist. Hierbei kann vorgesehen sein, dass der in den bogen- oder sichelförmigen Verlauf übergehende und der wenigstens einen Windung folgende Rückenabschnitt des Federzinkens auf dem die Vorspannung definierenden Auflageelement aufliegt. Auch eine solche Ausgestaltung trägt zu einer sehr kompakten Bauausführung des erfindungsgemäßen Bodenbearbeitungsgerätes bei, da hierbei der Federzinken mitsamt seiner federnden Windung bspw. nicht unterhalb des Rahmens aufgehängt werden muss, was zu gewissen Nachteilen hinsichtlich des benötigten Bauvolumens der gesamten Maschine führt, da aufgrund der erforderlichen Abmessungen des Federzinkens bei dessen Aufhängung unterhalb des Rahmens der gesamte Rahmen entsprechend hoch anzuordnen wäre.

Es sei an dieser Stelle betont, dass sich alle Aspekte des oben erwähnten erfindungsgemäßen landwirtschaftlichen Bodenbearbeitungsgerätes gleichermaßen auf den nachfolgend in verschiedenen Ausführungsvarianten beschriebenen Federzinken und/oder auf die nachfolgend in verschiedenen Ausführungsvarianten beschriebene Anordnung beziehen können. Wenn also an einer Stelle oder an mehreren Stellen die Rede vom Bodenbearbeitungsgerät und/oder einer seiner Ausführungsvarianten die Rede war, so beziehen sich die in diesem Zusammenhang definierten Merkmalskombinationen, Eigenschaften und/oder die dabei gemachten Aussagen uneingeschränkt auch auf den erfindungsgemäßen Federzinken und/oder auf die erfindungsgemäße Anordnung.

Zur Erreichung der oben genannten Ziele schlägt die Erfindung weiterhin einen Federzinken mit wenigstens einer Federwindung mit den Merkmalen des Anspruchs 11 vor. Dieser erfindungsgemäße Federzinken kann insbesondere in einem landwirtschaftlichen Bodenbearbeitungsgerät wie einem Grubber o. dgl. gemäß einer der zuvor beschriebenen Ausführungsvarianten eingesetzt werden. Bei dem Federzinken ist vorgesehen, dass er mit definierter und/oder innerhalb definierbarer Grenzen variabel einstellbarer Vorspannkraft beaufschlagt bzw. beaufschlagbar ist, wobei der zumindest eine mit Vorspannkraft beaufschlagte Federzinken mittels eines Auflageelements vorgespannt ist. Zu diesem Zweck kann der Federzinken in einem ersten, nicht an einem Rahmen und/oder Trägerteil, insbesondere eines landwirtschaftlichen Bodenbearbeitungsgeräts montiertem Zustand entspannt bzw. nicht vorgespannt sein, während er in einem zweiten, an einem Rahmen und/oder Trägerteil montierten Zustand vorgespannt und/oder mit definierter und/oder innerhalb definierbarer Grenzen variabel einstellbarer und/oder innerhalb definierbarer Grenzen variabler Vorspannkraft beaufschlagt bzw. beaufschlagbar ist. Somit kann der erfindungsgemäße Federzinken zumindest im montierten und damit vorgespannten Zustand eine nichtlineare Kraft-Weg-Kennlinie aufweisen. Dies kann insbesondere bedeuten, dass die nichtlineare Kraft-Weg-Kennlinie einen, ausgehend von einem Nullpunkt, flachen Verlauf aufweist, der bei Erreichen der Vorspannkraft in einen steileren Verlauf übergeht, bspw. unter Überwindung eines Knickes im Verlauf.

Der erfindungsgemäße Federzinken ist vorzugsweise elastisch nachgiebig, wobei die elastischen Eigenschaften des wenigstens einen Federzinkens sowohl durch seine Vorspannung, durch die Formgebung und/oder die Materialstärke des Federzinkens und/oder durch seine Materialeigenschaften und/oder durch seine Verankerung am Tragrahmen definiert bzw. mitbestimmt sein können. Wahlweise kann der Federzinken einen bogen- oder sichelförmigen Verlauf, wahlweise auch einen S-förmigen Verlauf aufweisen, welcher abschnittsweise, insbesondere in einem Bereich nahe einem am Rahmen oder Trägerabschnitt befestigbaren Einspannabschnitt in etwa gleichgerichtet, parallel oder ungefähr parallel zum Einspannabschnitt verläuft, wobei die wenigstens eine Federwindung des Federzinkens einen Kreisbogen oder Kreisbogenabschnitt mit einem Bogenwinkel zwischen etwa 500° bis etwa 600° beschreibt. Wahlweise kann der Federzinken mit einer einfachen Windung, einer doppelten Windung oder auch einer mehrfachen Windung ausgestattet sein.

Es sei an dieser Stelle betont, dass sich alle Aspekte des oben erwähnten erfindungsgemäßen Federzinkens gleichermaßen auf das zuvor in verschiedenen Ausführungsvarianten beschriebene landwirtschaftliche Bodenbearbeitungsgerät und/oder auf die nachfolgend in verschiedenen Ausführungsvarianten beschriebene Anordnung beziehen können. Wenn also an einer Stelle oder an mehreren Stellen die Rede von dem Federzinken und/oder einer seiner Ausführungsvarianten die Rede war, so beziehen sich die in diesem Zusammenhang definierten Merkmalskombinationen, Eigenschaften und/oder die dabei gemachten Aussagen uneingeschränkt auch auf das erfindungsgemäße landwirtschaftliche Bodenbearbeitungsgerät und/oder die erfindungsgemäße Anordnung.

Schließlich schlägt die vorliegende Erfindung zur Erreichung zumindest eines oder auch mehrerer der oben genannten Ziele eine Anordnung eines Federzinkens an einem Rahmen und/oder Trägerteil eines landwirtschaftlichen Bodenbearbeitungsgeräts mit den Merkmalen des Anspruchs 15 vor. Der Federzinken kann bspw. an einem Grubber montiert und dabei mittels eines Auflageelements vorgespannt sein. Wahlweise kann bei dieser Anordnung der zumindest eine im montierten Zustand mit der Vorspannkraft beaufschlagte Federzinken nahe seiner Befestigungsstelle am Rahmen mittels eines elastischen Auflageelements vorgespannt sein, wobei dieses Auflageelement bspw. durch einen elastischen Kunststoff o. dgl. gebildet sein kann, oder wobei dieses Auflageelement als starres Element, bspw. durch einen metallischen Werkstoff gebildet sein kann. Wahlweise ist es auch denkbar, den zumindest einen im montierten Zustand mit der Vorspannkraft beaufschlagten Federzinken mittels wenigstens eines hydraulischen Aktors und/oder pneumatischen Aktor und/oder Feder- und/oder Dämpfungselements vorzuspannen. Hierbei kann wahlweise vorgesehen sein, den Federzinken mittels wenigstens eines verstellbaren hydraulischen Aktors und/oder verstellbaren Feder- und/oder Dämpfungselements vorzuspannen.

Die Anordnung kann dann besonders kompakt ausfallen, wenn der Einspannabschnitt des wenigstens einen mit der Vorspannkraft beaufschlagten Federzinkens auf einer Oberseite oder auf einer Unterseite eines Rahmenträgers des Rahmens aufliegt und befestigt bzw. befestigbar ist. Außerdem kann es von Vorteil sein, wenn die wenigstens eine Windung des mit der Vorspannkraft beaufschlagten Federzinkens in Bewegungsrichtung des Bodenbearbeitungsgeräts frontseitig des Rahmenträgers angeordnet ist, an dem der Federzinken befestigt bzw. befestigbar ist. Zur Kompaktheit der erfindungsgemäßen Anordnung trägt es zudem bei, wenn das Auflageelement auf einer Oberseite des Rahmenträgers angeordnet ist, an dem der Federzinken befestigt bzw. befestigbar ist, wobei der in den bogen- oder sichelförmigen Verlauf übergehende und der wenigstens einen Windung folgende Rückenabschnitt des Federzinkens auf dem die Vorspannung definierenden Auflageelement aufliegt.

Es sei an dieser Stelle betont, dass sich alle Aspekte der oben erwähnten erfindungsgemäßen Anordnung gleichermaßen auf das zuvor in verschiedenen Ausführungsvarianten beschriebene landwirtschaftliche Bodenbearbeitungsgerät und/oder auf den zuvor in verschiedenen Ausführungsvarianten beschriebenen Federzinken beziehen können. Wenn also an einer Stelle oder an mehreren Stellen die Rede von der Anordnung und/oder einer ihrer Ausführungsvarianten die Rede war, so beziehen sich die in diesem Zusammenhang definierten Merkmalskombinationen, Eigenschaften und/oder die dabei gemachten Aussagen uneingeschränkt auch auf das erfindungsgemäße landwirtschaftliche Bodenbearbeitungsgerät und/oder den erfindungsgemäßen Federzinken.

Die Erfindung lässt sich insbesondere in der Landwirtschaft, in der Bodenbearbeitung und/oder in der Bauwirtschaft einsetzen und damit gewerblich anwenden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsvariante eines landwirtschaftlichen Bodenbearbeitungsgerätes bzw. eines Grubbers, der eine Vielzahl von Federzinken trägt, die jeweils an einem Rahmen befestigt sind.
Fig. 2 zeigt in insgesamt fünf schematischen Ansichten (Fig. 2A, Fig. 2B, Fig. 2C, 2D und Fig. 2E) eine Variante eines erfindungsgemäßen Federzinkens, wie er insbesondere Teil eines landwirtschaftlichen Bodenbearbeitungsgerätes bzw. eines Grubbers gemäß Fig. 1 sein kann.
Fig. 3 zeigt in insgesamt drei schematischen Ansichten (Fig. 3A, Fig. 3B und Fig. 3C) den Federzinken gemäß Fig. 2 in verschiedenen Montagezuständen.
Fig. 4 zeigt eine Kraft-Weg-Kennlinie eines vorgespannten Federzinkens.

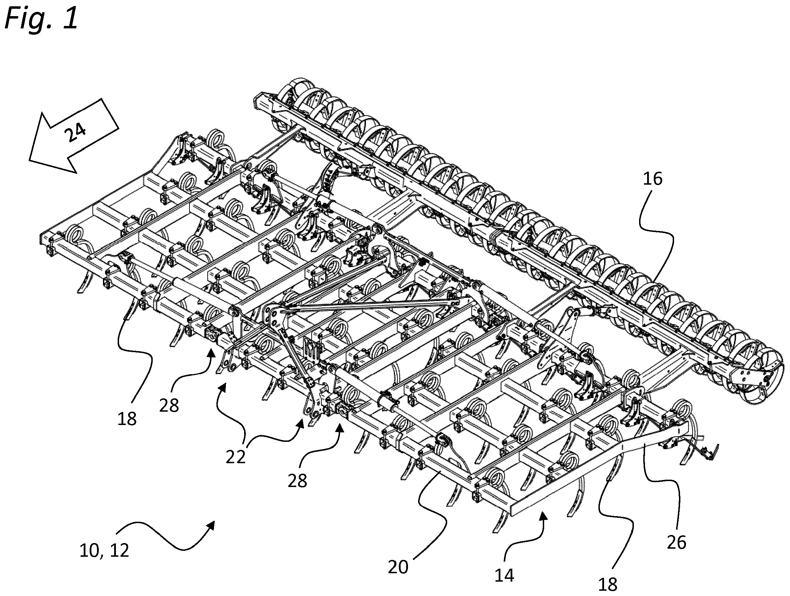

Für gleiche oder gleich wirkende Elemente der Erfindung werden in den Figuren 1 bis 4 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Die schematische Perspektivansicht der Fig. 1 zeigt eine Ausführungsvariante eines gezogenen landwirtschaftlichen Bodenbearbeitungsgerätes 10, das hier durch einen Grubber 12 gebildet ist, der insbesondere von einer hier nicht dargestellten landwirtschaftlichen Zugmaschine gezogen werden kann. Wenn im folgenden Zusammenhang unter Bezugnahme auf die Figuren 1 bis 4 von einem landwirtschaftlichen Bodenbearbeitungsgerät 10 oder von einem Grubber 12 gesprochen wird, so sind diese Begriffe generell synonym zu verstehen, außer es wird gesondert darauf hingewiesen.

Der in Fig. 1 beispielhaft gezeigte Grubber 12 ist mit einem Tragrahmen, Maschinenrahmen bzw. mit einem Rahmen 14 ausgestattet, an dem wahlweise geeignete Mittel zur Tiefenführung wie z.B. höhenverstellbare Tragräder angeordnet sein können (hier nicht gezeigt). Im gezeigten Ausführungsbeispiel ist heckseitig am Rahmen 14 eine höhenverstellbare Walze 16 gelagert, die gleichzeitig die Höheneinstellung des Rahmens 14 und damit die Tiefenführung der am Rahmen 14 befestigten Bodenbearbeitungswerkzeuge übernehmen kann. Diese Bodenbearbeitungswerkzeuge sind im gezeigten Ausführungsbeispiel durch insgesamt vier hintereinander angeordnete Reihen von jeweils zehn Federzinken 18 gebildet. Die Federzinken 18 sind jeweils an durch Vierkantrohre gebildeten Querträgern 20 des Rahmens 14 fixiert. Der Rahmen 14 ist durch insgesamt vier solcher Querträger 20 gebildet, wobei am hinteren Querträger 20 die höhenverstellbare Walze 16 gelagert und angelenkt ist. Der vordere Querträger 20 trägt einen Dreipunkt-Anschluss 22, dessen oberer Anschluss über Stützstreben im Bereich des hinteren Querträgers 20 abgestützt ist. Der Dreipunkt-Anschluss 22 dient der Verbindung mit einem hydraulisch heb- und senkbaren Dreipunkt-Kraftheber einer hier nicht gezeigten Zugmaschine, welche das landwirtschaftliche Bodenbearbeitungsgerät 10 bzw. den Grubber 12 bei bestimmungsgemäßem Einsatz in eine Fahrtrichtung 24 ziehen kann. Die insgesamt vier Querträger 20 sind mehrfach verbunden durch Längsträger 26, wodurch ein stabiler Rahmenverbund gebildet ist. Sinnvollerweise können seitliche Abschnitte des Rahmens 12 gegenüber einem Mittelteil an Gelenkstellen 28 um horizontale Schwenkachsen nach oben verschwenkt werden, was das landwirtschaftliche Bodenbearbeitungsgerät 10 bzw. den Grubber 12 in für einen Straßentransport taugliche Abmessungen bringen kann. Gleiches kann für die Walze 16 gelten, die für einen entsprechenden Falt- oder Klappvorgang sinnvollerweise mehrfach unterteilt sein kann.

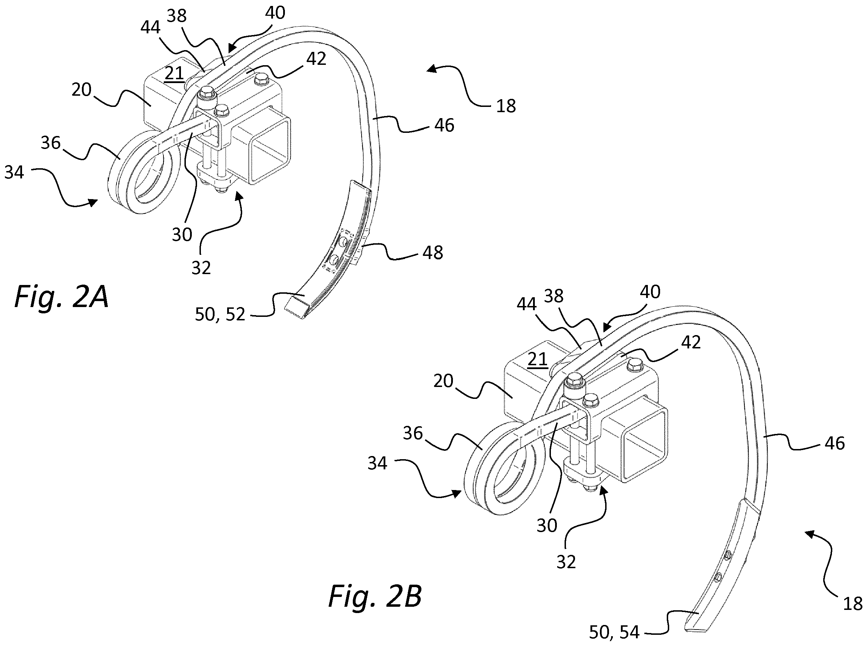

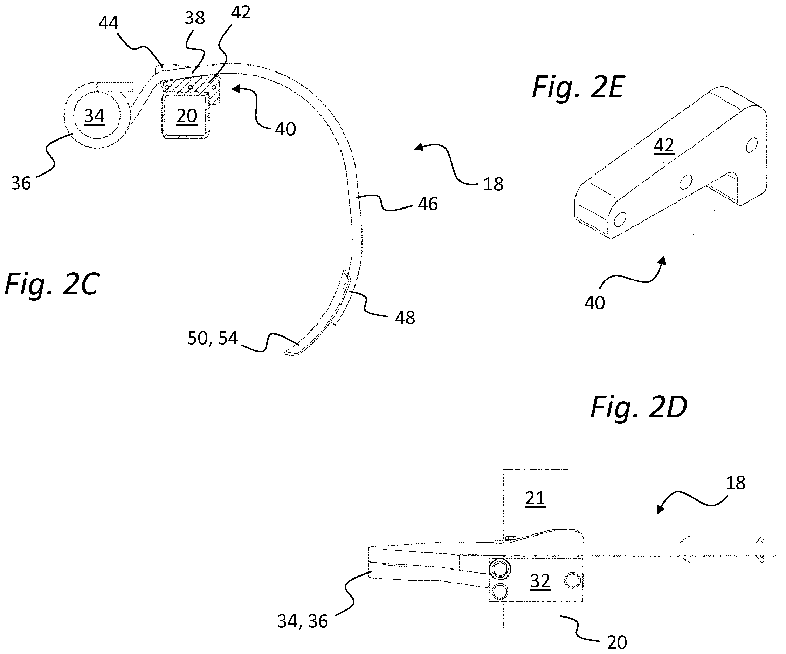

Die schematischen Perspektivdarstellungen der Figuren 2A und 2B zeigen zwei verschiedene Ausführungsvarianten des erfindungsgemäßen Federzinkens 18, der jeweils an einem der Querträger 20 des Rahmens 14 des landwirtschaftlichen Bodenbearbeitungsgeräts 10 bzw. des Grubbers 12 (vgl. Fig. 1) fixiert ist. Die Fig. 2C zeigt den Federzinken 18 und den Querträger 20 in einer Seitenansicht, während die Fig. 2D eine Draufsicht auf den Federzinken 18 und einen kurzen Teil des Querträgers 20 zeigt.

Wie es die Fig. 1 beispielhaft verdeutlicht, trägt der Rahmen 14 des Bodenbearbeitungsgerätes 10 bzw. des Grubbers 12 eine Vielzahl der in den Figuren 2A bis 2D gezeigten Federzinken 18, die jeweils einen zumindest abschnittsweise bogen- oder sichelförmigen Verlauf aufweisen und jeweils zumindest abschnittsweise elastisch verformbar und/oder unter Zugbelastung bei einem Eingriff bzw. Eintauchen in einen Ackerboden zumindest abschnittsweise elastisch nachgiebig sind. Der gezeigte Federzinken 18 ist durch einen entsprechend geformten Federstahl mit vierkantförmigem Querschnitt gebildet, wobei seine elastischen Eigenschaften sowohl durch die Formgebung und die Materialstärke des Federzinkens 18, durch seine Materialeigenschaften als auch durch seine Verankerung am Tragrahmen 14 definiert sind. Wie nachfolgend näher erläutert wird, ist jeder einzelne der Federzinken 18 mit definierter oder innerhalb definierbarer Grenzen variabel einstellbarer Vorspannkraft am Tragrahmen 12 verankert und fixiert.

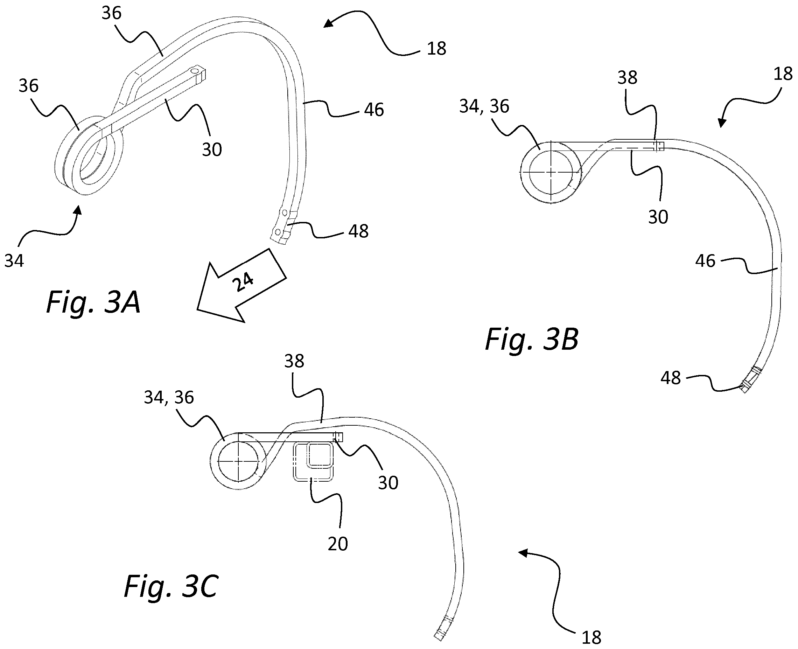

Jeder der Federzinken 18 umfasst insgesamt fünf Abschnitte bzw. Bereiche, wobei ein erster Abschnitt durch einen Einspannabschnitt 30 gebildet ist, der durch einen kurzen geraden Abschnitt des Federzinkens 18 gebildet ist, was besonders anhand der perspektivischen Schemadarstellung der Fig. 3A verdeutlicht ist. Wie es die Figuren 2A bis 2D zeigen, ist der kurze Einspannabschnitt 30 mittels einer Klemme 32 am als Vierkantrohr ausgebildeten Querträger 20 verschraubt, so dass der Einspannabschnitt 30 des Federzinkens 18 in Fahrtrichtung 24 nach vorne ragt. Wie es die Figuren 2A bis 2C verdeutlichen, liegt der Einspannabschnitt 30 unmittelbar auf einer Oberseite 21 des Querträgers 20 auf.

Der Einspannabschnitt 30 des Federzinkens 18 geht über in einen zweiten Abschnitt, der durch eine Ringfeder 34 mit wenigstens einer vollständigen Federwindung 36 gebildet ist, deren Windungsdurchmesser in etwa der Größenordnung des Rohrdurchmessers des Querträgers 20 entsprechen kann, wahlweise jedoch auch größer oder kleiner sein kann. Wie es die Figuren 2A, 2B und 3A verdeutlichen, durchläuft das Vierkantmaterial des Federstahls des Federzinkens 18 die Federwindung 36 der Ringfeder 34 in einem Bogenwinkel von etwa 540°, da anderthalb Windungen zu durchlaufen sind, bis sich der dritte Abschnitt des Federzinkens 18 anschließt.

Dieser dritte Abschnitt des Federzinkens 18 ist durch einen Auflageabschnitt 38 gebildet, der in etwa gleichgerichtet, parallel oder ungefähr parallel zu dem am Querträger 20 des Rahmens 12 befestigten Einspannabschnitt 30 verläuft. Im montierten Zustand des Federzinkens 18 liegt dieser Auflageabschnitt 38 des Federzinkens 18 auf einem Auflageelement 40 auf, das sich auf der Oberseite 21 des Querträgers 20 befindet, und das wahlweise Teil der Klemme 32 sein bzw. mit dieser verbunden sein kann. Das Auflageelement 40 ist durch eine keilförmige Unterlage 42 gebildet, an dem sich ein seitlicher Stützstreifen 44 befindet, so dass der Auflageabschnitt 38 zwischen der Klemme 32 und dem seitlichen Stützstreifen 44 geführt und am Herabrutschen vom Auflageelement 40 bei starker seitlicher Verformung während einer Bodenbearbeitung gehindert ist. Wahlweise kann das Auflageelement 40 bzw. dessen keilförmige Unterlage 42 durch ein elastisches Material bzw. durch ein elastisches Kunststoffmaterial gebildet sein, das durch den leicht schrägen Verlauf des Auflageabschnittes 38 über die keilförmige Unterlage 42 in gewünschter Weise vorspannt.

Das Auflageelement 40 weist eine L-förmige Form aus, wobei Länge und eine Höhe des Auflageelements in einem Verhältnis von etwa 2:1 stehen können, und wobei insbesondere die Länge einen Wert zwischen 90 mm und 120 mm und die Höhe des Auflageelements einen Wert zwischen 55 mm und 95 mm aufweisen können (Fig. 2E). Im montierten Zustand steht das Auflageelement 40 mit zumindest zwei Mantelflächen des Rahmenträgers 20 in Oberflächenkontakt, wobei das Auflageelement 40 insbesondere mit der Oberseite 21 und mit zumindest einer Seite des Rahmenträgers 20 in Oberflächenkontakt steht. Aufgrund der Ausbildung des Auflageelements 40 als keilförmige Unterlage bildet das Auflageelement 40 entlang seiner Längserstreckungsrichtung eine schräge Ebene und schließt damit einen Winkel ein, welcher Winkel einen Wert zwischen ca. 3° und ca. 15° beträgt, wobei der Winkel insbesondere zwischen ca. 5° und ca. 11° liegen kann (vgl. hierzu auch Fig. 2E).

Das Auflageelement 40 umfasst drei hier nicht mit Bezugsziffern näher bezeichnete, aber in Fig. 2C schematisch dargestellte Ausnehmungen, in welche Ausnehmungen jeweils Befestigungsmittel einsetzbar sind, so dass am Auflageelement 40 seitlich Stützstreifen 44 befestigbar sind. Die drei Aufnahmen sind jeweils auf einer Seitenfläche des Auflageelements 40 und gleichmäßig zueinander beabstandet auf einer Ebene angeordnet.

Die perspektivische Ansicht der Fig. 2E lässt eine mögliche Ausgestaltung des L-förmigen Auflageelements 40 erkennen, das die keilförmige Unterlage 42 für den darauf aufliegenden Auflageabschnitt 38 des Federzinkens 18 bildet. Die Darstellung der Fig. 2E zeigt das Auflageelement 40 ohne den oder die daran befestigten seitlichen Stützstreifen 44 (vgl. Figuren 2A, 2B und 2C), lässt jedoch deutlich die drei Ausnehmungen zu dessen bzw. deren Verankerung am Auflageelement sowie zu dessen Befestigung an der verschraubten Klemme 32 (vgl. Figuren 2A, 2B und 2C) erkennen.

Die Figuren 3B und 3C verdeutlichen die vorspannende Wirkungsweise des Auflageelements 40 in Zusammenwirkung mit dem Auflageabschnitt 38 des Federzinkens 18, der durch die Formgebung der Ringfeder 34 in der gezeigten Weise vorgespannt werden kann. Die Fig. 3B zeigt eine Seitenansicht eines nicht montierten Federzinkens 18, bei dem in entspannter Lage der Auflageabschnitt 38 exakt oder annähernd parallel zum Einspannabschnitt 30 verläuft. Dagegen zeigt die Seitenansicht der Fig. 3C den vorgespannten Federzinken 18, dessen Auflageabschnitt 38 im montierten Zustand durch die darunter befindliche keilförmige Unterlage 42 des Auflageelements 40 (vgl. Fig. 2C) leicht angehoben ist, so dass die Abschnitte 30 und 38 nicht mehr parallel verlaufen, sondern einen spitzen Winkel von bspw. 3° bis etwa 10° einschließen können, je nachdem, welches Maß an Vorspannung für den jeweiligen Einsatzfall gewünscht bzw. benötigt ist.

An den durch den Auflageabschnitt 38 gebildeten dritten Abschnitt des Federzinkens 18 schließt sich als vierter Abschnitt unmittelbar der eigentliche bogenförmige Zinkenbereich an, der von dem in etwa horizontal über die Oberseite 21 des Querträgers 20 geführten Auflageabschnitt 38 einem bogen- oder sichelförmigen Verlauf folgt und hierbei einen Bogenwinkel von zunächst etwa 90° einschließt. Der Bogenradius dieses bogenförmigen Zinkenabschnittes 46 ist naturgemäß deutlich größer als der Rohrdurchmesser des Querträgers 20 und beträgt zudem ein Mehrfaches des Durchmessers der Ringfeder 34. So kann der Bogenradius des bogenförmigen Zinkenabschnittes 46 bspw. etwa dem Drei- bis Sechsfachen des Durchmessers der Ringfeder 34 entsprechen, wahlweise jedoch auch noch größer sein. An diesen vierten Bereich des Federzinkens 18, der durch den bogenförmigen Zinkenabschnitt 46 gebildet ist, welcher im unteren Bereich in etwa vertikaler Richtung verläuft, schließt sich als fünfter Abschnitt ein in Fahrtrichtung 24 nach schräg unten und vorne weisendes freies Ende an, das als Befestigungsabschnitt 48 für ein den Boden furchendes Eingriffselement 50 dient. Wie es die Seitenansicht der Fig. 2C verdeutlicht, kann der Federzinken 18 zwischen dem Auflageabschnitt 38 und dem am Befestigungsabschnitt 48 aufgesetzten bzw. dort verschraubten furchenden Eingriffselement 50 einen Bogenwinkel von etwa 120° bis ca. 150° abdecken.

Das Eingriffselement 50 kann bspw. als schaufelförmige Scharspitze 52 (Fig. 2A) oder bspw. auch als V-förmige Scharspitze 54 (Fig. 2B) ausgebildet sein. Wahlweise sind auch andere Konturen denkbar, bspw. als sog. Gänsefußschar oder dgl. (nicht dargestellt).

Wie es die Figuren 2A bis 2D verdeutlichen, befindet sich die wenigstens eine Federwindung 36 der Ringfeder 34 des mit der Vorspannkraft beaufschlagten Federzinkens 18 in Fahrtrichtung 24 des Bodenbearbeitungsgeräts 10 frontseitig des Querträgers 20, an dem der Federzinken 18 befestigt ist, was insgesamt zu einer besonders platzsparenden Bauweise des Bodenbearbeitungsgerätes 10 bzw. Grubbers 12 mit relativ tief liegendem Rahmen 14 beitragen kann, wodurch auch größere Geräte 10 mit schwenkbaren und/oder faltbaren Abschnitten kompakt genug ausfallen können, um einen problemlosen Transport zu ermöglichen, insbesondere einen Transport auf öffentlichen Straßen. Auch die Anordnung des Auflageelements 40 an der Oberseite 21 des Querträgers 20 trägt zu einer sehr kompakten Bauausführung des Bodenbearbeitungsgerätes 10 bei, da hierbei die gleichartig fixierten und ausgestalteten Federzinken 18 (vgl. Fig. 1) mitsamt ihrer federnden Windung 36 nicht unterhalb des Rahmens 14 aufgehängt werden müssen. Andernfalls wäre aufgrund der erforderlichen Abmessungen der Federzinken 18 bei deren Aufhängung unterhalb des Rahmens 14 der gesamte Rahmen 14 entsprechend hoch anzuordnen, um einen ausreichenden Federweg des Federzinkens 18 zu gewährleisten.

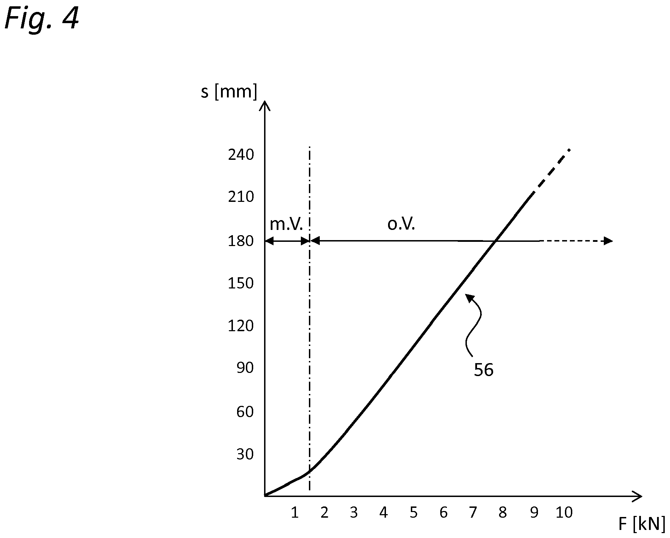

Das schematische Diagramm der Fig. 4 verdeutlicht den Effekt der Vorspannung der Federzinken 18, die durch ihre federnde Ausgestaltung und die Ringfeder 34 bereits eine erwünschte und zur Vermeidung von Beschädigungen erforderliche Nachgiebigkeit beim Auftreffen auf größere Hindernisse wie Steine, Erdbrocken oder andere derartige Hindernisse aufweisen. Darüber hinaus sind die Federzinken 18 jeweils mit einer definierten und/oder innerhalb definierbarer Grenzen variabel einstellbaren Vorspannkraft beaufschlagt. Wie es die Figuren 3B und 3C verdeutlichen, sind die Federzinken 18 in einem ersten, nicht montierten Zustand entspannt bzw. nicht vorgespannt (Fig. 3B), während dieselben Federzinken 18 in einem zweiten, montierten Zustand vorgespannt und/oder mit definierter und/oder innerhalb definierbarer Grenzen variabel einstellbarer Vorspannkraft beaufschlagt sind (Fig. 3C).

Die anhand des Diagramms der Fig. 4 verdeutlichte Vorspannung der Federzinken 18 ermöglichen eine weitgehend gleichmäßige Bodenbearbeitung. Wie es das Kraft-Weg-Diagramm der Fig. 4 andeutet, geben die Federzinken 18 bei Hindernissen nach und weichen entgegen der Fahrtrichtung um bis zu 200 mm oder ggf. etwas mehr aus, wodurch sie beim Auftreffen auf Hindernisse wie etwa Steine noch einen ausreichenden Federweg zur Verfügung stellen können. Gemäß der Vorgabe der vorliegenden Erfindung weist jedoch der im montierten Zustand mit der Vorspannkraft beaufschlagte Federzinken 18 eine nichtlineare Kraft-Weg-Kennlinie 56 auf. Diese nichtlineare Kraft-Weg-Kennlinie 56, die einen Zusammenhang zwischen einer während eines Bodenbearbeitungsvorganges auf den Federzinken 18 bzw. auf seine Scharspitze 52 bzw. 54 wirkende und entgegen der Fahrtrichtung 24 gerichtete Widerstandskraft und einer Auslenkung zeigt, folgt zunächst von einem Nullpunkt ausgehend einem relativ flachen Verlauf, der bei Erreichen der definierten bzw. definierbaren Vorspannkraft in einen steileren Verlauf übergeht. Auf der horizontalen Abszisse ist eine auf den Federzinken 18 wirkende Kraft in Kilo-Newton (F in kN) aufgetragen, während die vertikale Ordinate die hierdurch bewirkte Auslenkung in Millimeter (s in mm) zeigt.

Im gezeigten Ausführungsbeispiel der Fig. 4 beschreibt die Kennlinie 56 bei einer wirksamen Kraft zwischen etwa Null und etwa 1,5 kN einen flacheren Verlauf, da hier die Vorspannung (m.V. in Fig. 4) wirkt, wodurch die Auslenkung bei etwa 1,5 kN nur ca. 15 mm beträgt. Anschließend weist die Kennlinie 56 eine Unstetigkeitsstelle bzw. einen mehr oder weniger deutlichen Knick in ihrem Verlauf auf, der je nach Ausgestaltung der Vorspannung ggf. auch durch einen abgerundeten bzw. weicheren Übergang oder-je nach Ausgestaltung als mehrstufige Vorspannung - auch durch mehrfache Knicke etc. ersetzt sein kann. Nach diesem Knick bzw. der Steigungszunahme ab 1,5 kN steigt die Kurve steiler an, bleibt in diesem Bereich ohne Vorspannung (o.V. in Fig. 4) jedoch weitgehend linear, so dass bei einer wirkenden Kraft von etwa 9 kN eine Auslenkung von etwas mehr als 200 mm erreicht sein kann.

Der Bereich jenseits von 9 kN und einer Auslenkung von mehr als ca. 210 mm ist im gezeigten Ausführungsbeispiel undefiniert, da bei einer Überschreitung einer bestimmten Maximalkraft eine Überlastung des Federzinkens 18, ggf. dessen plastische Verformung und/oder sein Versagen drohen kann.

Durch Anpassung der Materialstärke des Federzinkens 18, der Auslegung der Ringfeder 34, der Radien des bogenförmigen Bereichs 46 und/oder der Höhe des Auflageelements 40 und/oder dessen Vorspannkraft können sowohl die Kurvenverläufe der Kraft-Weg-Kennlinie 56 als auch deren Steigung, die Platzierung des Übergangsbereichs zwischen dem flacheren Verlauf mit Vorspannung und dem steileren Verlauf ohne Vorspannung etc. angepasst und modifiziert werden.

### Bezugszeichenliste

- 10: Bodenbearbeitungsgerät, landwirtschaftliches Bodenbearbeitungsgerät
- 12: Grubber
- 14: Rahmen, Tragrahmen, Maschinenrahmen
- 16: Walze
- 18: Federzinken
- 20: Querträger, Querrohr, Trägerteil, Rahmenträger
- 21: Oberseite (des Querträgers, des Querrohrs)
- 22: Dreipunkt-Anschluss
- 24: Fahrtrichtung, Bewegungsrichtung
- 26: Längsträger
- 28: Gelenkstelle
- 30: Einspannabschnitt (erster Abschnitt des Federzinkens)
- 32: Klemme, Schraubklemme, verschraubte Klemme
- 34: Ringfeder
- 36: Federwindung
- 38: Auflageabschnitt
- 40: Auflageelement
- 42: Unterlage, elastische Unterlage, keilförmige Unterlage
- 44: Stützstreifen, seitlicher Stützstreifen
- 46: bogenförmiger Zinkenbereich, bogenförmiger Zinkenabschnitt
- 48: Befestigungsabschnitt
- 50: Eingriffselement
- 52: Scharspitze, schaufelförmige Scharspitze
- 54: Scharspitze, V-förmige Scharspitze
- 56: Kraft-Weg-Kennlinie

- s: Weg, Ausweichbewegung des Federzinkens
- F: Kraft, Auslösekraft

## Patentansprüche

1. Landwirtschaftliches Bodenbearbeitungsgerät (10), insbesondere Grubber (12), mit einem Rahmen (14) und daran befestigten Federzinken (18), welche jeweils wenigstens eine Federwindung (36) aufweisen, **dadurch gekennzeichnet, dass** zumindest einer der Federzinken (18) mittels eines Auflageelements (40), das eine Auflagefläche für den Federzinken (18) bereitstellt, mit definierter und/oder innerhalb definierbarer Grenzen variabler Vorspannkraft beaufschlagt ist, wodurch der Federzinken (18) eine nichtlineare Kraft-Weg-Kennlinie (56) aufweist, welche nichtlineare Kraft-Weg-Kennlinie einen vom Nullpunkt ausgehenden flachen Verlauf aufweist, und bei Erreichen einer definierten bzw. definierbaren Vorspannkraft in einen steileren Verlauf übergeht.

2. Bodenbearbeitungsgerät nach Anspruch 1, bei dem der wenigstens eine Federzinken (18) in einem ersten, nicht montierten Zustand entspannt bzw. nicht vorgespannt ist, und bei dem der Federzinken (18) in einem zweiten, montierten Zustand vorgespannt und/oder mit definierter und/oder innerhalb definierbarer Grenzen variabler und/oder variabel einstellbarer Vorspannkraft beaufschlagt ist.

3. Bodenbearbeitungsgerät nach Anspruch 1 oder 2, bei dem das Auflageelement (40) durch eine keilförmige Unterlage gebildet ist.

4. Bodenbearbeitungsgerät nach einem der Ansprüche 1 bis 3, bei dem das Auflageelement (40) zumindest teil- oder abschnittsweise aus einem elastisch nachgiebigen Material gebildet ist.

5. Bodenbearbeitungsgerät nach einem der Ansprüche 1 bis 4, dessen wenigstens einer mit der Vorspannkraft beaufschlagte Federzinken (18) einen bogen- oder sichelförmigen Verlauf aufweist, welcher abschnittsweise, insbesondere in einem Bereich nahe des Rahmens (14) in etwa gleichgerichtet, parallel oder ungefähr parallel zu einem am oder im Rahmen (14) befestigten bzw. befestigbaren Einspannabschnitt (30) verläuft, wobei die wenigstens eine vollständige Federwindung (36) des Federzinkens (18) einen Kreisbogen oder Kreisbogenabschnitt mit einem Bogenwinkel zwischen etwa 500° bis 600° beschreibt.

6. Bodenbearbeitungsgerät nach Anspruch 5, bei dem der Einspannabschnitt (30) des wenigstens einen mit der Vorspannkraft beaufschlagten Federzinkens (18) auf einer Oberseite (21) oder Unterseite eines Rahmenträgers (20) des Rahmens (14) aufliegt und befestigt bzw. befestigbar ist.

7. Bodenbearbeitungsgerät nach Anspruch 5 oder 6, bei dem die wenigstens eine Windung (36) des mit der Vorspannkraft beaufschlagten Federzinkens (18) in Bewegungsrichtung (24) des Bodenbearbeitungsgeräts (10) frontseitig des Rahmenträgers (20) angeordnet ist, an dem der Federzinken (18) befestigt bzw. befestigbar ist.

8. Bodenbearbeitungsgerät nach einem der Ansprüche 5 bis 7, bei dem das Auflageelement (40) auf einer Oberseite (21) oder Unterseite des Rahmenträgers (20) angeordnet ist, an dem der Federzinken (18) befestigt bzw. befestigbar ist, wobei der in den bogen- oder sichelförmigen Verlauf übergehende und der wenigstens einen Windung folgende Rückenabschnitt (46) des Federzinkens (18) auf dem die Vorspannung definierenden Auflageelement (40) aufliegt.

9. Bodenbearbeitungsgerät nach einem der Ansprüche 5 bis 8, bei dem das Auflageelement (40) wenigstens eine Ausnehmung, insbesondere zur Aufnahme und/oder Zusammenwirkung mit Befestigungsmitteln umfasst.

10. Bodenbearbeitungsgerät nach einem der Ansprüche 5 bis 9, bei dem die Auflagefläche des Auflageelements (40) entlang seiner Längserstreckungsrichtung einen Winkel zwischen 5° und 11° einschließt.

11. Federzinken (18) mit wenigstens einer Federwindung (36), insbesondere zur Verwendung in einem landwirtschaftlichen Bodenbearbeitungsgerät (10) wie einem Grubber (12) o. dgl., insbesondere gemäß einem der Ansprüche 1 bis 10, **dadurch gekennzeichnet, dass** der Federzinken (18) mit definierter und/oder innerhalb definierbarer Grenzen variabler Vorspannkraft beaufschlagt bzw. beaufschlagbar ist, wobei der mit der Vorspannkraft beaufschlagte Federzinken (18) mittels eines Auflageelements (40), das eine Auflagefläche für den Federzinken (18) bereitstellt, vorgespannt ist, wodurch der Federzinken (18) eine nichtlineare Kraft-Weg-Kennlinie (56) aufweist, welche nichtlineare Kraft-Weg-Kennlinie einen vom Nullpunkt ausgehenden flachen Verlauf aufweist, und bei Erreichen einer definierten bzw. definierbaren Vorspannkraft in einen steileren Verlauf übergeht.

12. Federzinken nach Anspruch 11, der in einem ersten, nicht an einem Rahmen (14) und/oder Trägerteil (20), insbesondere eines landwirtschaftlichen Bodenbearbeitungsgeräts (10) montiertem Zustand entspannt bzw. nicht vorgespannt ist, und der in einem zweiten, an einem Rahmen (14) und/oder Trägerteil (20) montierten Zustand vorgespannt und/oder mit definierter und/oder innerhalb definierbarer Grenzen variabler Vorspannkraft beaufschlagt bzw. beaufschlagbar ist.

13. Federzinken nach Anspruch 11 oder 12, der elastisch nachgiebig ist, wobei die elastischen Eigenschaften des wenigstens einen Federzinkens (18) sowohl durch seine Vorspannung, durch die Formgebung und/oder die Materialstärke des Federzinkens (18) und/oder durch seine Materialeigenschaften und/oder durch seine Verankerung am Tragrahmen (14) definiert bzw. mitbestimmt sind.

14. Federzinken nach einem der Ansprüche 11 bis 13, der einen bogen- oder sichelförmigen Verlauf aufweist, welcher abschnittsweise, insbesondere in einem Bereich nahe eines am Rahmen (14) oder Trägerabschnitt (20) befestigbaren Einspannabschnittes (30) in etwa gleichgerichtet, parallel oder ungefähr parallel zum Einspannabschnitt (30) verläuft, wobei die wenigstens eine vollständige Federwindung (36) des Federzinkens (18) einen Kreisbogen oder Kreisbogenabschnitt mit einem Bogenwinkel zwischen etwa 500° bis 600° beschreibt.

15. Anordnung eines Federzinkens gemäß einem der Ansprüche 11 bis 14, der an einem Rahmen (14) und/oder Trägerteil (20) eines landwirtschaftlichen Bodenbearbeitungsgeräts (10) gemäß einem der Ansprüche 1 bis 10, insbesondere eines Grubbers (12) montiert ist, **dadurch gekennzeichnet, dass** der Federzinken (18) mittels eines Auflageelements (40) vorgespannt ist.

16. Anordnung nach Anspruch 15, bei welcher der Einspannabschnitt (30) des wenigstens einen mit der Vorspannkraft beaufschlagten Federzinkens (18) auf einer Oberseite (21) oder Unterseite eines Rahmenträgers (20) des Rahmens (14) aufliegt und befestigt bzw. befestigbar ist.

## Claims

1. An agricultural soil tillage implement (10), in particular, a field cultivator (12), with a frame (14) having spring tines (18) attached thereto, each spring tine (18) having at least one spring coil (36), **characterised in that** a preload force that is defined and/or variable within definable limits is applied to at least one of the spring tines (18) by a support element (40) providing a support surface for the spring tine (18), whereby the spring tine (18) obtains a non-linear force displacement curve (56) that has a flat gradient starting from the zero point and merges into a steeper gradient upon reaching a defined or definable preload force.

2. The soil tillage implement according to claim 1, in which in a first, non-mounted state, the at least one spring tine (18) is relaxed or not preloaded, and in which in a second, mounted state, the spring tine (18) is preloaded and/or under application of a preload force that is defined and/or variable within definable limits and/or variably adjustable.

3. The soil tillage implement according to claim 1 or 2, in which the support element (40) is formed by a wedge-shaped support.

4. The soil tillage implement according to one of the claims 1 to 3, in which the support element (40) is at least in part or in sections formed from an elastically yielding material.

5. The soil tillage implement according to one of the claims 1 to 4, of which the at least one spring tine (18) under application of the preload force has an arc- or crescent-shaped profile, which in sections, in particular, in an area near the frame (14), runs approximately oriented in the same direction, parallel, or approximately parallel relative to a clamping section (30) attached or attachable to or in the frame (14), wherein the at least one complete spring coil (36) of the spring tine (18) describes a circular arc or a circular arc segment with an arc angle between approximately 500 degrees and 600 degrees.

6. The soil tillage implement according to claim 5, in which the clamping section (30) of the at least one spring tine (18) under application of the preload force rests on and is attached or attachable to a top side (21) or underside of a frame part (20) of the frame (14).

7. The soil tillage implement according to claim 5 or 6, in which the at least one coil (36) of the spring tine (18) under application of the preload force is arranged, with respect to the movement direction (24) of the soil tillage implement (10), at the front side of the frame part (20) to which the spring tine (18) is attached or attachable.

8. The soil tillage implement according to one of the claims 5 to 7, in which the support element (40) is arranged on a top side (21) or underside of the frame part (20) to which the spring tine (18) is attached or attachable, wherein the spring tine (18) back section (46), which merges into the arc- or crescent-shaped profile and follows the at least one coil, rests on the support element (40) defining the preload force.

9. The soil tillage implement according to one of the claims 5 to 8, in which the support element (40) comprises at least one recess, in particular for the accommodation and/or interaction with attachment means.

10. The soil tillage implement according to one of the claims 5 to 9, in which the support surface of the support element (40) encloses an angle between 5 degrees and 11 degrees along its longitudinal extension direction.

11. A spring tine (18) with at least one spring coil (36), in particular for use in an agricultural soil tillage implement (10), such as a field cultivator (12) or the like, in particular according to one of the claims 1 to 10, **characterised in that** a preload force that is defined and/or variable within definable limits is applied or applicable to the spring tine (18), wherein the spring tine (18) under application of the preload force is preloaded by a support element (40) providing a support surface for the spring tine (18), whereby the spring tine (18) obtains a non-linear force displacement curve (56) that has a flat gradient starting from the zero point and merges into a steeper gradient upon reaching a defined or definable preload force.

12. The spring tine according to claim 11, which is relaxed or not preloaded in a first state, in which the spring tine (18) is not mounted to a frame (14) and/or to a frame part (20) of, in particular, an agricultural soil tillage implement (10), and which spring tine (18) is preloaded and/or to which spring tine (18) a preload force that is defined and/or variable within definable limits is applied or applicable in a second state, in which the spring tine (18) is mounted to a frame (14) and/or to a frame part (20).

13. The spring tine according to claim 11 or 12, which is elastically yielding, wherein the elastic characteristics of the at least one spring tine (18) are defined or co-determined by its preload as well as by the shape and/or material thickness of the spring tine (18) and/or by its material characteristics and/or by its anchorage at the carrier frame (14).

14. The spring tine according to one of the claims 11 to 13, which has an arc- or crescent-shaped profile, which in sections, in particular, in an area near a clamping section (30) that is attachable to a frame (14) or to a frame part (20), runs approximately oriented in the same direction, parallel, or approximately parallel relative to the clamping section (30), wherein the at least one complete spring coil (36) of the spring tine (18) describes a circular arc or a circular arc segment with an arc angle between approximately 500 degrees and 600 degrees.

15. An arrangement of a spring tine according to one of the claims 11 to 14, the spring tine being mounted to a frame (14) and/or to a frame part (20) of an agricultural soil tillage implement (10) according to one of the claims 1 to 10, in particular, of a field cultivator (12), **characterised in that** the spring tine (18) is preloaded by a support element (40).

16. The arrangement according to claim 15, in which the clamping section (30) of the at least one spring tine (18) under application of the preload force rests on and is attached or attachable to a top side (21) or underside of a frame part (20) of the frame (14).

## Revendications

1. Appareil agricole de travail du sol (10), notamment cultivateur (12), doté d'un châssis (14) et de dents souples (18) qui y sont fixées, présentant chacune au moins une spire (36), **caractérisé en ce qu'**une force de précontrainte définie et/ou variable au sein de seuils définissables est appliquée à au moins une des dents souples (18) au moyen d'un élément d'application (40) qui fournit une surface d'appui à la dent souple (18), ladite dent souple (18) présentant une courbe caractéristique non linéaire du trajet de la force (56), ladite courbe caractéristique non linéaire du trajet de force présentant une trajectoire plate à partir du point zéro, et amorçant une pente à versant plus raide lorsqu'elle atteint une force de précontrainte définie ou pouvant être définie.

2. Appareil agricole de travail du sol selon la revendication 1, dans lequel ladite au moins une dent souple (18) est détendue, voire non précontrainte dans un premier état ou elle n'est pas montée, et dans lequel la dent souple (18) est, dans un deuxième état où elle est montée, précontrainte et/ou à laquelle est appliquée une force de précontrainte définie et/ou variable au sein de seuils définissables et/ou ajustable de manière variable.

3. Appareil agricole de travail du sol selon la revendication 1 ou 2, dans lequel l'élément d'application (40) est constitué d'un support en forme de clavette.

4. Appareil agricole de travail du sol selon l'une quelconque des revendications 1 à 3, dans lequel l'élément d'application (40) est constitué au moins partiellement ou dans certaines portions d'un matériau souple et élastique.

5. Appareil agricole de travail du sol selon l'une quelconque des revendications 1 à 4, dont au moins une dent souple (18), à laquelle est appliquée une force de précontrainte, présente une trajectoire en forme d'arc ou de faucille qui suit, dans certaines portions, notamment dans une zone à proximité du châssis (14), une trajectoire environ de même orientation, parallèle ou environ parallèle à une portion de serrage (30) fixée ou pouvant être fixée au ou dans le châssis (14), ladite au moins une spire (36) complète de la dent souple (18) décrivant un arc de cercle ou une portion d'arc de cercle d'un angle compris entre 500° et 600°.

6. Appareil agricole de travail du sol selon la revendication 5, dans lequel la portion de serrage (30) de ladite au moins une dent souple (18) à laquelle est appliquée la force de précontrainte repose sur une face supérieure (21) ou inférieure d'un support de châssis (20) du châssis (14) et y est fixée ou peut y être fixée.

7. Appareil agricole de travail du sol selon la revendication 5 ou 6, dans lequel ladite au moins une spire (36) de la dent souple (18) à laquelle est appliquée la force de précontrainte est agencée, dans le sens de marche (24) de l'appareil agricole de travail du sol (10) à l'avant du support du châssis (20), auquel la dent souple (18) est fixée ou peut être fixée.

8. Appareil agricole de travail du sol selon l'une quelconque des revendications 5 à 7, dans lequel l'élément d'application (40) est agencé sur une face supérieure (21) ou inférieure du support de châssis (20), auquel la dent souple (18) est fixée ou peut être fixée, la portion de dos (46) de la dent souple (18) passant dans la trajectoire en forme d'arc ou de faucille et suivant au moins une spire repose sur l'élément d'application (40) définissant la force de précontrainte.

9. Appareil agricole de travail du sol selon l'une quelconque des revendications 5 à 8, dans lequel l'élément d'application (40) comprend au moins une cavité, notamment pour accueillir et/ou pour coopérer avec des moyens de fixation.

10. Appareil agricole de travail du sol selon l'une quelconque des revendications 5 à 9, dans lequel la surface d'appui de l'élément d'application (40) inclue le long de son sens d'étendue longitudinale un angle compris entre 5° et 11°.

11. Dent souple (18) dotée d'au moins une spire (36), notamment destinée à être utilisée dans un appareil agricole de travail du sol (10) tel qu'un cultivateur (12) ou équivalent, notamment selon l'une quelconque des revendications 1 à 10, **caractérisée en ce qu'**une force de précontrainte définie et/ou variable au sein de seuils définissables est appliquée ou peut être appliquée à ladite dent souple (18), la dent souple (18) à laquelle est appliquée la force de précontrainte, étant précontrainte au moyen d'un élément d'application (40) qui fournit une surface d'appui à la dent souple (18), ladite dent souple (18) présentant une courbe caractéristique non linéaire du trajet de force (56), ladite courbe caractéristique non linéaire du trajet de force présentant une trajectoire plate à partir du point zéro et amorçant une pente à versant plus raide au moment où elle atteint une force de précontrainte définie ou pouvant être définie.

12. Dent souple selon la revendication 11 qui est détendue ou non précontrainte dans un premier état, non montée à un châssis (14) et/ou pièce porteuse (20), notamment d'un appareil agricole de travail du sol (10), et qui, dans un deuxième état, montée à un châssis (14) et/ou à une pièce porteuse (20) est précontrainte et/ou à laquelle est appliquée ou peut être appliquée une force de précontrainte définie et/ou variable au sein de seuils définis.

13. Dent souple selon la revendication 11 ou 12, souple et élastique, les caractéristiques élastiques de ladite au moins une dent souple (18) étant définies voire co-déterminées aussi bien par sa précontrainte que par la forme et/ou par l'épaisseur de matériau de la dent souple (18) et/ou par ses caractéristiques de matériau et/ou par sa solidarisation avec le châssis (14).

14. Dent souple selon l'une quelconque des revendications 11 à 13, présentant une trajectoire en forme d'arc ou de faucille qui suit, dans certaines portions, notamment dans une zone à proximité d'une portion de serrage (30) pouvant être fixée au châssis (14) ou portion porteuse (20), une trajectoire environ de même orientation, parallèle ou environ parallèle à ladite portion de serrage (30), ladite au moins une spire (36) complète de la dent souple (18) décrivant un arc de cercle ou une portion d'arc de cercle d'un angle compris entre 500° et 600°.

15. Assemblage d'une dent souple selon l'une quelconque des revendications 11 à 14, qui est montée à un châssis (14) ou une partie porteuse (20) d'un appareil agricole de travail du sol (10) selon l'une quelconque des revendications 1 à 10, notamment d'un cultivateur (12), **caractérisé en ce que** la dent souple (18) est précontrainte au moyen d'un élément d'application (40).

16. Assemblage selon la revendication 15, dans lequel la portion de serrage (30) de ladite au moins une dent souple (18) à laquelle est appliquée la force de précontrainte repose sur une face supérieure (21) ou inférieure d'un support de châssis (20) du châssis (14) et y est fixée ou peut y être fixée.
